## Europäisches Patentamt

## European Patent Office

## Office européen des brevets

(19)

(11) Veröffentlichungsnummer: **0 135 527**
**B1**

(12) **EUROPÄISCHE PATENTSCHRIFT**

(45) Veröffentlichungstag der Patentschrift:
**10.12.86**

(21) Anmeldenummer: **84900703.4**

(22) Anmeldetag: **16.02.84**

(86) Internationale Anmeldenummer:
**PCT/AT 84/00007**

(87) Internationale Veröffentlichungsnummer:
**WO 84/03223 (30.08.84 Gazette 84/21)**

(51) Int. Cl.⁴: **A 63 B 69/38**, A 63 B 47/02 //
B65G51/02

(54) **ANLAGE ZUM FÖRDERN VON TENNISBÄLLEN.**

(30) Priorität: **23.02.83 AT 611/83**

(43) Veröffentlichungstag der Anmeldung:
**03.04.85 Patentblatt 85/14**

(45) Bekanntmachung des Hinweises auf die Patenterteilung:
**10.12.86 Patentblatt 86/50**

(84) Benannte Vertragsstaaten:
**AT BE CH DE FR GB LI NL SE**

(56) Entgegenhaltungen:
**DE - A - 2 456 997**
**DE - A - 2 720 593**

(73) Patentinhaber: **STABEG Apparatebaugesellschaft m.b.H., Reinlgasse 5-9, A-1140 Wien (AT)**

(72) Erfinder: **SALANSKY, Werner, Viktor-Hagl-Gasse 9, A-1140 Wien (AT)**

(74) Vertreter: **Hofinger, Engelbert, Torggler-Hofinger Wilhelm-Greil-Strasse 16, A-6020 Innsbruck (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Anlage zum Fördern von Tennisbällen aus einer Sammelrinne in einen Schlauch und weiter in einen Sammelbehälter, wobei die Bälle einzeln durch eine mechanische Fördereinrichtung zu einer Öffnung des Schlauches und anschliessend mittels eines Druckluftgefälles in diesem zum Sammelbehälter bewegt werden.

Derartige Anlagen haben üblicherweise den Zweck, die von einem Spieler gegen die lotrechte Prallwand oder eine dazu angeordnete Rampe geschlagenen Bälle zu sammeln, um sie wieder zurück zu einer Ballwurfmaschine zu führen.

Die Bewegung der Bälle in der Sammelrinne kann unter dem ausschliesslichen Einfluss der Schwerkraft erfolgen (vgl. DE-A-23 34 849) oder aber unter Verwendung von Förderbändern (vgl. EP-A-0 043 886). Der Transport der Tennisbälle vom Ende der Sammelrinne zum Sammelbehälter erfolgt üblicherweise durch einen flexiblen Schlauch unter dem Einfluss einer in der Ballwurfmaschine angeordneten Saugeinrichtung.

Die Verwendung in der Ballwurfmaschine angeordneter Saugeinrichtungen zur Bewegung der Bälle durch den Schlauch scheint durchaus vorteilhaft, da üblicherweise die Bälle aus der Ballwurfmaschine durch Druckluft ausgestossen werden und somit dieselbe Einrichtung dazu verwendet werden kann, die Bälle zur Ballwurfmaschine zu bewegen und sie mit der gewünschten Richtung und Geschwindigkeit auszuschleudern. Werden die Bälle aus der Sammelrinne in den Schlauch gesaugt, so besteht zudem keine Notwendigkeit, besonders aufwendige Vorkehrungen zu deren Einführung in den Schlauch zu treffen.

In der Praxis hat sich gezeigt, dass die auf der Ansaugung der Bälle durch den Schlauch beruhenden Einrichtungen schlecht funktionieren. Das Fehlen einer geordneten Zuführung für die Bälle kann nämlich zur Folge haben, dass die Bälle in zu geringem Abstand in den Schlauch geraten und dort eine Stauung entsteht. Vor allem aber ist die Aufstellung der bekannten Anlagen im Freien so gut wie unmöglich, da Laub und Abfälle in gleicher Weise angesaugt werden wie die Bälle.

US-PS 2 508 461 zeigt bereits die Verwendung eines frei blasenden Gebläses zur Förderung von Bällen, wobei es sich allerdings um ganz leichte Tischtennisbälle handelt, welche auch dann nicht zu einer Verstopfung des Schlauches führen, wenn sie in ganz dichter Folge in diesen gelangen. Es ist übrigens unklar, ob die Bälle tatsächlich in den Schlauch eintreten würden, oder ob sie nicht durch den aus der Öffnung austretenden Luftstrom hochgehoben und am Eintreten behindert würden. Mit normalen Tennisbällen durchgeführte Versuche lassen es jedenfalls höchst unglaubwürdig erscheinen, dass die Bälle ohne mechanische Zwangsführung überhaupt ins Innere des Schlauches gelangen könnten.

Eine mechanische Zwangsführung zum Einbringen von Tennisbällen in den Schlauch einer pneumatischen Fördereinrichtung zeigt allerdings bereits US-PS 3 989 245. Die dort beschriebene Einrichtung hat aber nicht das Problem zu lösen, einzeln ankommende Bälle zu sammeln. Vielmehr dient das dort vorgesehene „Schaufelrad" dazu, aus einem Vorrat von Bällen einzelne Bälle in definierten Abständen in einen Kanal zu befördern, in welchem sie durch Druckluftstösse weiterbewegt werden. Es wäre keineswegs zweckmässig, diese Anordnung auf eine Einrichtung gemäss dem Stand der Technik gemäss EP-A-0 043 886 zu übertragen. Eine Einrichtung zur Erzeugung von Druckluft ist wesentlich teurer als ein freiblasendes Gebläse. Periodische Druckluftstösse mit der dreifachen Frequenz des Schaufelrades würden zu einer nicht unerheblichen Lärmbelästigung führen. Andererseits wird die Synchronisation von Schaufelrad und Drucklufterzeuger schwierig, wenn nur dann ein Druckstoss erfolgen soll, wenn tatsächlich ein Tennisball in den Schlauch eingebracht worden ist. Verwendet man andererseits ein Gebläse zur Erzeugung des die Bälle bewegenden Druckgefälles, ist anders als im Fall von US-PS 3 989 245 dafür zu sorgen, dass der Luftstrom nicht durch die Eintrittsöffnung für die Bälle entweicht.

Die Erfindung soll es demgegenüber erlauben, ein freiblasendes Gebläse zur Erzeugung des Luftstromes zu verwenden, ohne dass die Bälle in zu dichter Folge in den Schlauch eintreten. Erfindungsgemäss ist dazu vorgesehen, dass zur Erzeugung des Druckluftgefälles im Schlauch am eingangsseitigen Ende des Schlauches ein Gebläse angeordnet ist, dass die mechanische Fördereinrichtung ein in den Schlauchquerschnitt eingreifendes Schaufelrad umfasst, und dass das Schaufelrad mittels einer Welle in einem Gehäuse angeordnet ist, wobei die Welle parallel zum Schlauchansatzstutzen aus Gehäuse verläuft und jeweils mindestens zwei Schaufeln den Austritt des vom Gebläse erzeugten Luftstromes aus dem Gehäuse verhindern.

Die Koordinierung der Zufuhr von Bällen durch die Sammelrinne und ihre Einführung in den Luftstrom ist besonders einfach, wenn die Förderung der Bälle durch die Sammelrinne mittels einer Förderschnecke erfolgt, welche vom selben Motor angetrieben werden kann wie das Schaufelrad.

Weitere Einzelheiten der Erfindung werden anschliessend anhand der Zeichnungen erläutert.

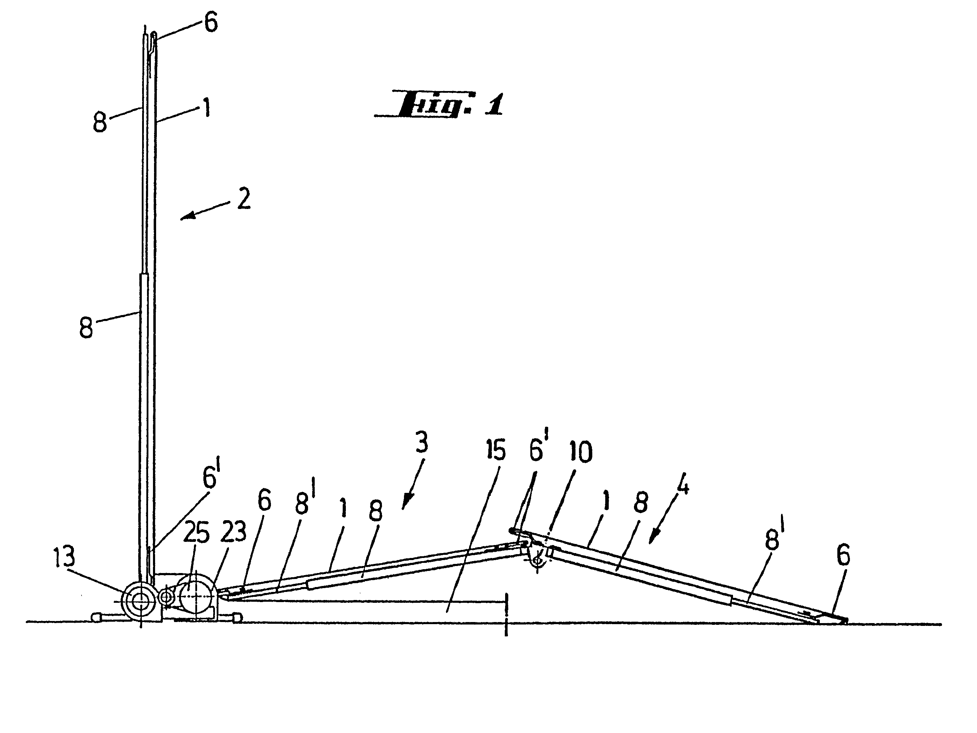

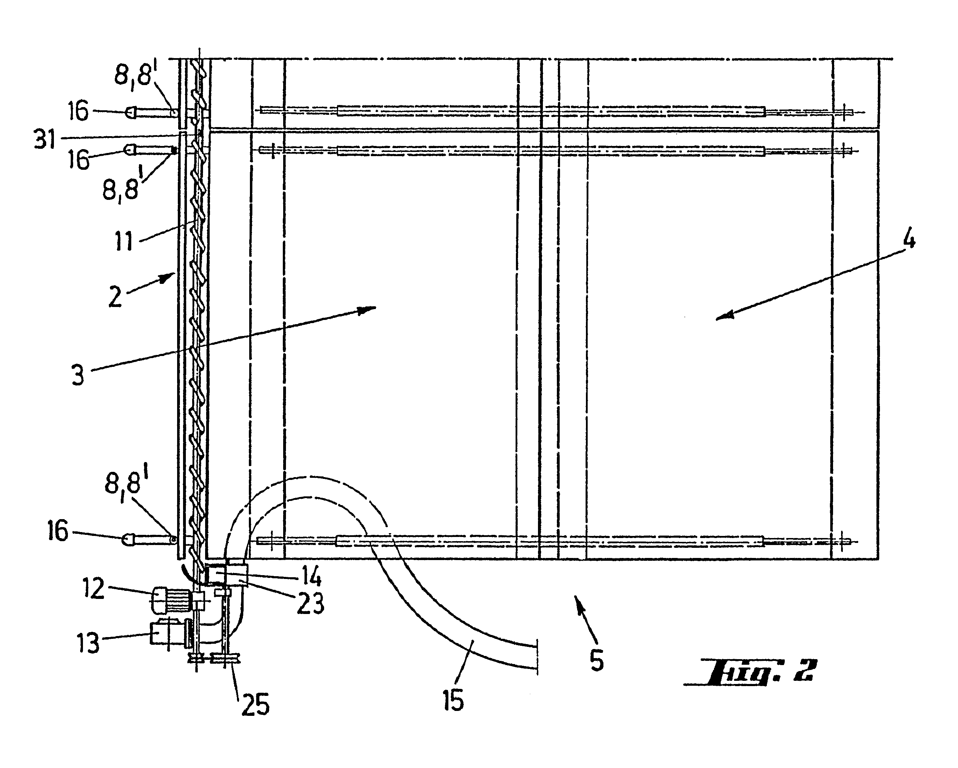

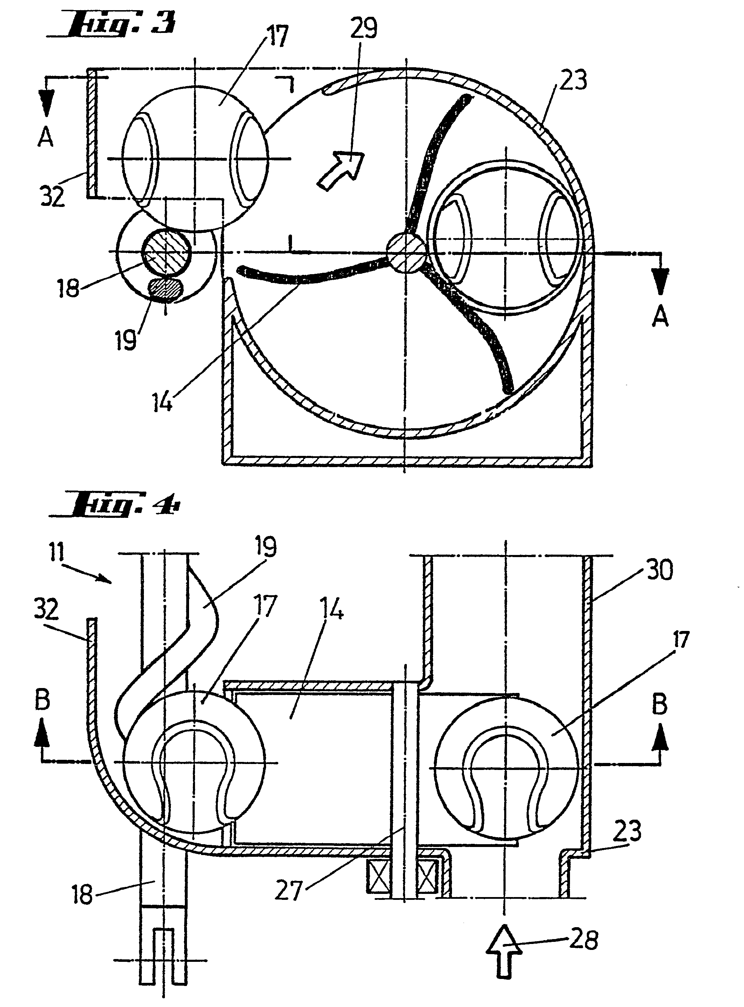

Fig. 1 stellt ein Ausführungsbeispiel für eine erfindungsgemässe Gesamtanlage von der Seite dar, Fig. 2 ist die zugehörige Draufsicht. Fig. 3 ist ein Schnitt nach der Linie B-B in Fig. 4 und Fig. 4 ein Schnitt nach der Linie A-A in Fig. 3, jeweils durch das vergrössert dargestellte Einlassgehäuse für die Bälle.

Die erfindungsgemässe Anordnung besteht im wesentlichen aus einer von Ständern 16 getragenen, wenigstens annähernd vertikalen Prallwand 2, die ebenso wie die aus einem aufsteigenden Bereich 3 und einem absteigenden Bereich 4 zusammengesetzte Rampe 5 mit einer Bespannung 1 versehen ist. Diese Bespannung verläuft zwischen Randleisten 6 und 6', die durch teleskopartig ineinandergeschobene Seitenteile 8, 8' auf Distanz gehalten werden.

Ein Gelenk 10 hält die Rampe 5 in der dargestellten Lage, sodass sich zwischen Rampe 5 und Prallwand 2 eine Sammelrinne bildet. Durch diese Sammelrinne werden die Tennisbälle 17 im vorliegenden Ausführungsbeispiel durch eine Förderschnecke 11 zu einem Einlassgehäuse 23 gefördert, in welches sie von einem Schaufelrad 14 einzeln eingeführt werden. Dieses Schaufelrad 14 wird mittels eines Übersetzungsgetriebes 25 vom selben Motor 12 angetrieben wie die Förderschnecke 11. Aus dem Gehäuse 23 werden die Tennisbälle 17 durch die von einem Gebläse 13 kommende Luftströmung in den Schlauch 15 gedrückt, durch welchen sie zu dem nicht dargestellten Sammelbehälter, beispielsweise einer Ballwurfmaschine, gelangen.

Wie besonders aus Fig. 2 hervorgeht, sind Prallwand 2 und Rampe 5 aus Einzelteilen konstanter Breite zusammengesetzt, wodurch die ganze Anlage leicht transportfähig wird und ausserdem im verschiedenen Breiten aus vorbereiteten Elementen zusammengesetzt werden kann. Zum Transport der Tennisbälle 17 genügt dabei eine einzige Fördereinrichtung. Die Förderschnecke 11 ist jedoch mit zusammensteckbaren Enden 31 zu versehen, die es erlauben, sie zu beliebiger Länge anzustückeln.

Wie aus Fig. 3 und 4 ersichtlich ist, fördert eine aus einer Stange 18 und einer um diese gelegten Wendel 19 bestehende Förderschnecke 11 Bälle 17 bis zum Ende der Sammelrinne, wo sie durch ein Umlenkblech 32 dem Schaufelrad 14 zugeführt werden. Dieses Schaufelrad 14 bewegt sich in dem Einlassgehäuse 23 für die Bälle 17, welches von einem Luftstrom 28 durchsetzt ist, welcher durch ein konventionelles Gebläse erzeugt werden kann. Das Schaufelrad 14 dreht sich in Richtung des Pfeiles 29 und bringt dabei in geordneter Abfolge die Bälle 17 in den Luftstrom 28, der sie mitreisst und durch den am Stutzen 30 angesetzten, in Fig. 4 nicht dargestellten Schlauch 15 zur Ballwurfmaschine bewegt.

Ein besonderer Vorteil der dargestellten Anordnung liegt darin, dass jeweils zwei Schaufeln des Schaufelrades 14 den Eingang des Gehäuses verschliessen und dadurch verhindern, dass Luft aus dem Gehäuse 23 austritt. Die Bälle 17 können somit in den Erfassungsbereich des Schaufelrades gelangen, ohne den Widerstand ausströmender Luft überwinden zu müssen.

Die Anordnung kann dadurch sehr kompakt gemacht werden, dass ein einziger Motor die Förderschnecke 11 und – über die Welle 27 – das Schaufelrad 14 antreibt. Durch geeignete Wahl des Übersetzungsverhältnisses der Übersetzung 25 kann dabei sichergestellt werden, dass im Normalfall die Bälle das Einlassgehäuse 23 in Zeitabständen erreichen, bei denen es zu keinen Stauungen am Eingang des Gehäuses kommt. Steht überdies, wie in Fig. 2 dargestellt, der Motor 12 im Einlassbereich des Gebläses 13, so bewirkt die vom Gebläse 13 angesaugte Luft eine zusätzliche Motorkühlung.

## Patentansprüche

1. Anlage zum Fördern von Tennisbällen aus einer Sammelrinne in einen Schlauch (15) und weiter in einen Sammelbehälter, wobei die Tennisbälle (17) einzeln durch eine mechanische Fördereinrichtung (14) zu einer Öffnung des Schlauches und anschliessend mittels eines Druckluftgefälles in diesem zum Sammelbehälter bewegt werden, dadurch gekennzeichnet, dass zur Erzeugung des Druckluftgefälles im Schlauch (15) am eingangsseitigen Ende des Schlauches (15) ein Gebläse (13) angeordnet ist, dass die mechanische Fördereinrichtung ein in den Schlauchquerschnitt eingreifendes Schaufelrad (14) umfasst, und dass das Schaufelrad (14) mittels einer Welle (27) in einem Gehäuse (23) angeordnet ist, wobei die Welle parallel zum Schlauchansatzstutzen verläuft und jeweils mindestens zwei Schaufeln den Austritt des vom Gebläse (13) erzeugten Luftstromes aus dem Gehäuse (23) verhindern.

2. Anlage nach Anspruch 1, dadurch gekennzeichnet, dass die mechanische Fördereinrichtung zusätzlich zum Schaufelrad (14) eine in der Sammelrinne angeordnete Förderschnecke (11) umfasst.

3. Anlage nach Anspruch 2, dadurch gekennzeichnet, dass Schaufelrad (14) und Förderschnecke (11) durch ein Übersetzungsgetriebe (25) verbunden und mittels eines einzigen Motors (12) antreibbar sind.

## Claims

1. A system for delivering tennis balls from a collection trough into a hose (15) and then into a collection container, the tennis balls (17) being moved individually to an opening of the hose by a mechanical delivery system, and subsequently being moved by a pressure difference within said hose to the collection container, characterized in that a fan (13) is arranged at the entry end of the hose (15) to generate the pressure difference in the hose (15), that the mechanical delivery system comprises a paddle-wheel (14) that fits in the cross-section of the hose, and that the paddle-wheel (14) is arranged in a housing (23) by means of a shaft (27), in each instance the shaft running parallel to the coupling piece of the hose and at least two paddles preventing the egress of the flow of air generated by the fan (13) from the housing (23).

2. A system according to claim 1, characterized in that the mechanical delivery system comprises, in addition to the paddle-wheel (14), a screw conveyor (11) disposed in the collection trough.

3. A system according to claim 2, characterized in that paddle-wheel (14) and screw conveyor (11) are connected by a transfer gearbox (25) so as to be driven by a single motor (12).

## Revendications

1. Installation pour transporter des balles de tennis d'une rigole collectrice à un flexible (15), puis à un récipient collecteur, les balles de tennis (17) étant individuellement déplacées par un dispositif d'acheminement mécanique (14) vers une ouverture du flexible, puis vers le récipient collecteur au moyen d'une chute de pression de l'air comprimé dans ledit flexible, caractérisée par le fait qu'une soufflerie (13) est installée à l'extrémité du flexible (15) située côté entrée, en vue d'engendrer la chute de pression de l'air comprimé dans ce flexible (15) ; par le fait que le dispositif d'acheminement mécanique englobe une roue (14) à ailettes s'engageant dans la section du flexible; et par le fait que la roue (14) à ailettes est disposée au moyen d'un arbre (27) dans un boîtier (23), ledit arbre s'étendant parallèlement au raccord d'embout du flexible, et au moins deux ailettes respectives empêchant le courant d'air, engendré par la soufflerie (13), de sortir du boîtier (23).

2. Installation selon la revendication 1, caractérisée par le fait que le dispositif d'acheminement mécanique présente, en plus de la roue (14) à ailettes, une vis sans fin transporteuse (11) disposée dans la rigole collectrice.

3. Installation selon la revendication 2, caractérisée par le fait que la roue (14) à ailettes et la vis sans fin transporteuse (11) sont reliées par l'intermédiaire d'un train démultiplicateur (25) et peuvent être entraînées au moyen d'un seul et unique moteur (12).

Fig. 1

*Fig: 2*

0 135 527

# Fig. 3

# Fig. 4